# EUROPEAN PATENT APPLICATION

(11) **EP 4 582 308 A2**
(43) Date of publication of application: **09.07.2025**
(21) Application number: 24219350.6
(22) Date of filing: 12.12.2024
(51) Int. Cl.: B60N 2/26, B60N 2/28, G01C 9/12, A47D 1/00, A47D 13/00, B62B 7/00

(54) **FIBER OPTIC LEVEL INDICATOR**

(30) Priority: 12.12.2023 US 202363609162 P; 04.12.2024 US 202418968112
(71) Applicant: Wonderland Switzerland AG, 6312 Steinhausen (CH)
(72) Inventor: Eggert-Crowe, Colin F., Pennsylvania (US); Gearhart, Samuel, Pennsylvania (US)
(74) Representative: Boult Wade Tennant LLP

(57) **Abstract**

A level indicator includes a housing and an indicator member rotatable relative to the housing. The indicator member is biased by gravity to a resting position. The indicator member has a luminescent visual indicator. The luminescent visual indicator indicates a position of the indicator member relative to the housing.

## Description

### CROSS REFERENCE TO RELATED APPLICATIONS

This application is a non-provisional which claims the benefit of U.S. Provisional Patent Application No. 63/609,162, filed December 12, 2023, which is incorporated by reference in its entirety herein.

### BACKGROUND

Exemplary embodiments of the disclosure relate to a level indicator, and in some embodiments to a level indicator for use with a child safety system.

A child safety system is used to transport children and is typically designed for use in an automobile vehicle to properly restrain a child in the event of accident. A child safety system is design to meet the Federal Motor Vehicle Safety Standards when properly installed within a vehicle. However, most child safety seats are incorrectly installed. To improve installation within a vehicle, some child safety seats include a means to level the child safety seat relative to the vehicle seat angle. While existing indicators, such as bubbles levels, provide angle feedback of the child safety seat, these indicators can be difficult to see and can be read incorrectly due to refraction of light.

### BRIEF DESCRIPTION

According to an embodiment, a level indicator including a housing and an indicator member rotatable relative to the housing. The indicator member is biased by gravity to a resting position. The indicator member has a luminescent visual indicator. The luminescent visual indicator indicates a position of the indicator member relative to the housing.

In addition to one or more of the features described above, or as an alternative, in further embodiments the indicator member includes a light transmission member and a portion of the light transmission member forms the luminescent visual indicator.

In addition to one or more of the features described above, or as an alternative, in further embodiments the light transmission member is a fiber optic filament.

In addition to one or more of the features described above, or as an alternative, in further embodiments the fiber optic filament is colored.

In addition to one or more of the features described above, or as an alternative, in further embodiments the luminescent visual indicator is arranged at an end of the indicator member.

In addition to one or more of the features described above, or as an alternative, in further embodiments an end of the fiber optic filament is arranged adjacent to the end of the indicator member.

In addition to one or more of the features described above, or as an alternative, in further embodiments the fiber optic filament is arranged within an interior of a body of the indicator member.

In addition to one or more of the features described above, or as an alternative, in further embodiments the indicator member has a first end and a second end and a center of mass of the indicator member is located closer to the first end than the second end.

In addition to one or more of the features described above, or as an alternative, in further embodiments in the resting position, the first end is disposed vertically beneath the second end.

In addition to one or more of the features described above, or as an alternative, in further embodiments the first end of the indicator member is enlarged relative to a remainder of the indicator member.

In addition to one or more of the features described above, or as an alternative, in further embodiments the first end of the indicator member is weighted.

In addition to one or more of the features described above, or as an alternative, in further embodiments the visual indicator of the indicator member is arranged at a second, opposite end of the visual indicator.

In addition to one or more of the features described above, or as an alternative, in further embodiments the indicator member includes a weight. The visual indicator of the indicator member and the weight of the indicator member are arranged at opposite sides of an axis of rotation of the indicator member. The indicator member is rotatable relative to the housing about the axis of rotation.

In addition to one or more of the features described above, or as an alternative, in further embodiments including a pin extending from the housing and having a longitudinal axis, the indicator member being rotatable about the longitudinal axis.

In addition to one or more of the features described above, or as an alternative, in further embodiments at least a portion of the indicator member is arranged within an interior of the housing.

In addition to one or more of the features described above, or as an alternative, in further embodiments including a cover connectable to the housing. The indicator member is arranged within a cavity defined between the housing and the cover.

According to an embodiment, a child seat component includes a seat body and a level indicator operably coupled to the body. The level indicator has a luminescent visual indicator operable to indicate a position of the seat body relative to a horizontal plane.

In addition to one or more of the features described above, or as an alternative, in further embodiments the seat body is a support base of a child safety system.

In addition to one or more of the features described above, or as an alternative, in further embodiments the seat body is a child seat of a child safety system.

In addition to one or more of the features described above, or as an alternative, in further embodiments the level indicator further includes a housing and an indicator member rotatable relative to the housing and biased by gravity to a resting position. The luminescent visual indicator is arranged at the indicator member.

In addition to one or more of the features described above, or as an alternative, in further embodiments the indicator member includes a light transmission member and a portion of the light transmission member forms the luminescent visual indicator.

In addition to one or more of the features described above, or as an alternative, in further embodiments the light transmission member is a fiber optic filament.

In addition to one or more of the features described above, or as an alternative, in further embodiments the fiber optic filament is colored.

In addition to one or more of the features described above, or as an alternative, in further embodiments the luminescent visual indicator is arranged at an end of the indicator member.

In addition to one or more of the features described above, or as an alternative, in further embodiments an end of the light transmission member is arranged adjacent to the end of the indicator member.

In addition to one or more of the features described above, or as an alternative, in further embodiments the indicator member includes an indicator member body and the fiber optic filament is arranged within an interior of the indicator member body.

In addition to one or more of the features described above, or as an alternative, in further embodiments the indicator member has a first end and a second end and a center of mass of the indicator member is located closer to the first end than the second end.

In addition to one or more of the features described above, or as an alternative, in further embodiments in the resting position, the first end is disposed vertically beneath the second end.

In addition to one or more of the features described above, or as an alternative, in further embodiments the first end of the indicator member is enlarged relative to a remainder of the indicator member.

In addition to one or more of the features described above, or as an alternative, in further embodiments the first end of the indicator member is weighted.

In addition to one or more of the features described above, or as an alternative, in further embodiments the visual indicator is arranged at a second, opposite end of the visual indicator.

In addition to one or more of the features described above, or as an alternative, in further embodiments the indicator member includes a weight. The visual indicator and the weight are arranged at opposite sides of an axis of rotation of the indicator member. The indicator member is rotatable about the axis of rotation relative to the housing.

A child furniture item includes a body operable to support a child and a level indicator associated with the body to identify a level position of the body. The level indicator includes a housing and an indicator member rotatable relative to the housing. The indicator member is biased by gravity to a resting position. The indicator member has a luminescent visual indicator. The luminescent visual indicator indicates a position of the indicator member relative to the housing

In addition to one or more of the features described above, or as an alternative, in further embodiments the child furniture item is a high chair.

In addition to one or more of the features described above, or as an alternative, in further embodiments the child furniture item is child seat.

In addition to one or more of the features described above, or as an alternative, in further embodiments the child furniture item is a playard or pack and play.

In addition to one or more of the features described above, or as an alternative, in further embodiments the child furniture item is a stroller.

In addition to one or more of the features described above, or as an alternative, in further embodiments the indicator member includes a light transmission member, and a portion of the light transmission member forms the luminescent visual indicator.

In addition to one or more of the features described above, or as an alternative, in further embodiments the light transmission member is a fiber optic filament.

In addition to one or more of the features described above, or as an alternative, in further embodiments the light transmission member is arranged within an interior of a body of the indicator member.

In addition to one or more of the features described above, or as an alternative, in further embodiments the luminescent visual indicator is arranged at an end of the indicator member.

In addition to one or more of the features described above, or as an alternative, in further embodiments the indicator member has a first end and a second end, and a center of mass of the indicator member is located closer to the first end than the second end.

In addition to one or more of the features described above, or as an alternative, in further embodiments the first end of the indicator member is enlarged relative to a remainder of the indicator member.

In addition to one or more of the features described above, or as an alternative, in further embodiments the first end of the indicator member is weighted.

### BRIEF DESCRIPTION OF THE DRAWINGS

The following descriptions should not be considered limiting in any way. With reference to the accompanying drawings, like elements are numbered alike:
FIG. 1 is a front view of a level indicator according to an embodiment;
FIG. 2 is a front view of the level indicator of FIG. 1 having an indicator member represented in various positions according to an embodiment;
FIG. 3 is a top perspective view of a level indicator according to an embodiment;
FIG. 4 is a side view of a child safety system including an infant seat according to an embodiment;
FIG. 5 is a perspective view of an infant seat of the child safety system of FIG. 4 according to an embodiment;
FIG. 6 is a side view of a child safety system including a convertible child seat in a forward-facing direction according to an embodiment;
FIG. 7 is a side view of the child safety system including a convertible child seat of FIG. 6 in a reclined and rearward-facing direction according to an embodiment;
FIG. 8 is a top perspective view of the convertible child seat of FIGS. 6 and 7 according to an embodiment; and
FIG. 9 is a schematic diagram of a cover of an indicator member according to an embodiment.

### DETAILED DESCRIPTION

A detailed description of one or more embodiments of the disclosed apparatus and method are presented herein by way of exemplification and not limitation with reference to the Figures.

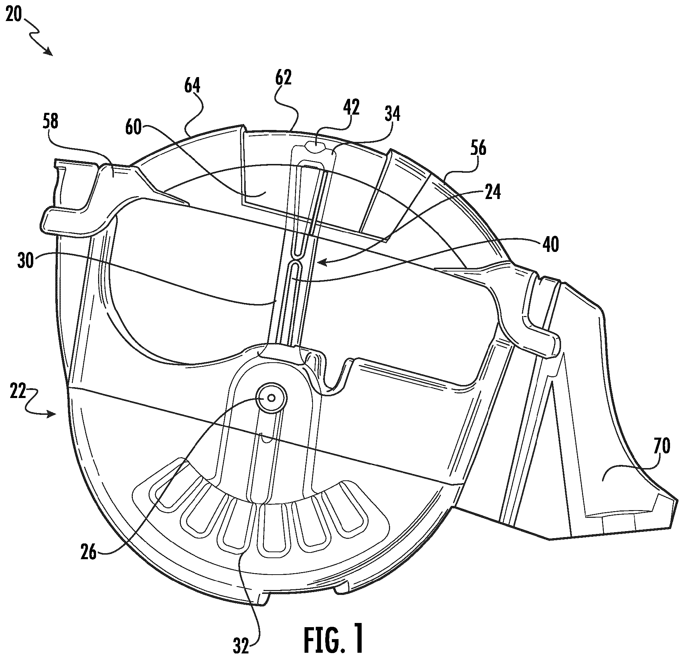

With reference now to FIGS. 1-3, an example of a level indicator 20 is illustrated according to an embodiment. As shown, the level indicator 20 includes a housing 22 and an indicator member 24 movable relative to the housing 22. Suitable materials for the housing 22 include but are not limited to rigid plastic or composite materials for example. In the illustrated, non-limiting embodiment, a pin or shaft 26 protrudes from a surface of the housing 22, such as an interior surface of the housing 22 for example. The pin 26 may be integrally formed with the housing 22, or alternatively, may be a separate component mounted to the housing 22. The indicator member 24 is configured to at least partially rotate about the longitudinal axis X of the pin 26. In an embodiment, the indicator member 24 is rotatably mounted to the pin 26.

The indicator member 24 may include an elongated rigid body 30 having a first end 32 and an opposite, second end 34. In the illustrated, non-limiting embodiment, the first end 32 of the body 30 is configured to facilitate rotation of the indicator member 24 to a resting or equilibrium position. In an embodiment, the first end 32 of the body 30 is enlarged relative to the remainder of the body 30. For example, a width of the body 30 at the first end 32 may be greater than the width of the body 30 at the second end 34 and/or at a generally central portion the body 30. Alternatively, or in addition, the first end 32 of the body 30 may be weighted or include a mass that intentionally adds weight to the first end 32. As a result of the enlarged first end 32 or the weight embedded therein, the center of mass of the indicator member 24 is positioned closer to the first end 32 than the second end 34. Because the indicator member 24 is rotatably mounted about the pin 26, the indicator member 24 is operable in a manner similar to a pendulum with the first end 32 of the indicator member 24 acting as a pendulum bob. The gravitational forces acting on the first end 32 of the indicator member will cause the indicator member 24 to rotate freely about the pin 26 and its axis X until the indicator member reaches a resting, equilibrium position. In the resting, equilibrium position, the indicator member 24 may be oriented generally vertically with the first end 32 of the body 30 being aligned with and arranged beneath the second end 34.

A portion of the indicator member 24, such as the second end 34 thereof for example, may be operable to indicate to a user a position of indicator member 24 relative to the housing 22. Accordingly, the visual indicator and the weight are arranged at opposite sides of the axis of rotation of the indicator member. The second end 34 of the indicator member 24 may be a luminescent visual indicator. In an embodiment, a visible light is emitted at the second end 34 of the indicator member 24, and this light is the visual indicator. As shown, the body 30 of the indicator member 24 may include one or more light transmission members 40 that form the visual indicator by emitting visible light at the second end 34 of the body 30. Although the light transmission member 40 in the non-limiting embodiments described herein is a fiber optic element, it should be understood that the use of any suitable light transmission member, such as a light pipe for example, is within the scope of the disclosure. In an embodiment, the light is emitted from an end 42 of the fiber optic filament 40. Accordingly, in some embodiments, the end 42 of the at least one fiber optic filament 40 is arranged at or near the second end 34 of the body 30 such that the light emitted therefrom is visible at the second end 34 of the indicator member.

In operation, the fiber optic filament 40 is configured to gather the surrounding ambient light and output it at an end thereof. Further, the light output from the fiber optic filament 40 may be concentrated, making it easier to see. In some embodiments, the fiber optic filament 40 may have a color embedded therein. As a result, the concentrated light emitted from the second end 34 of the indicator member 24 may be the same color as the fiber optic filament 40 through which the light was transmitted.

The one or more fiber optic filaments 40 may be mounted to or may be positioned within the body 30 of the indicator member 24. In embodiments where the at least one fiber optic filament 40 is arranged at least partially within an interior of the body 30 of the indicator member 24, light must be able to pass through the body 30 to the at least one fiber optic filament 40. For example, in some embodiments, the body 30 of the indicator member 24 may have one or more openings formed therein. Alternatively, or in addition, all or at least a portion of the body 30 may be translucent such that ambient or surrounding light can transmit through the body 30 into the fiber optic filament 40. However, embodiments where another light source is is associated with the at least one fiber optic filament 40 and is configured to transmit light therethrough are also within the scope of the disclosure. For example, a luminescent material may be positioned adjacent to the first end 32 of the indicator member 24, such as on the inner part of the housing for example, and may be the source of the light transmitted through the light transmission member 40. In other embodiments, light from a powered light source (not shown), such as a light emitting diode (LED) for example, may be transmitted to the light transmission member 40 to form a visual indicator at the indicator member 24. In such embodiments, the body 30 of the indicator member 24 need not include windows or be translucent and the fiber optic filament 40 may include a cladding or jacket. A powered light source may be arranged at an interior of the housing 22, or alternatively, may be located near the housing 22, such as on an adjacent portion of a child seat for example, as will be described in more detail below. In other embodiments, the light source may be arranged at or near any surface that allows the light emitted therefrom to transmit toward the light transmission member 40.

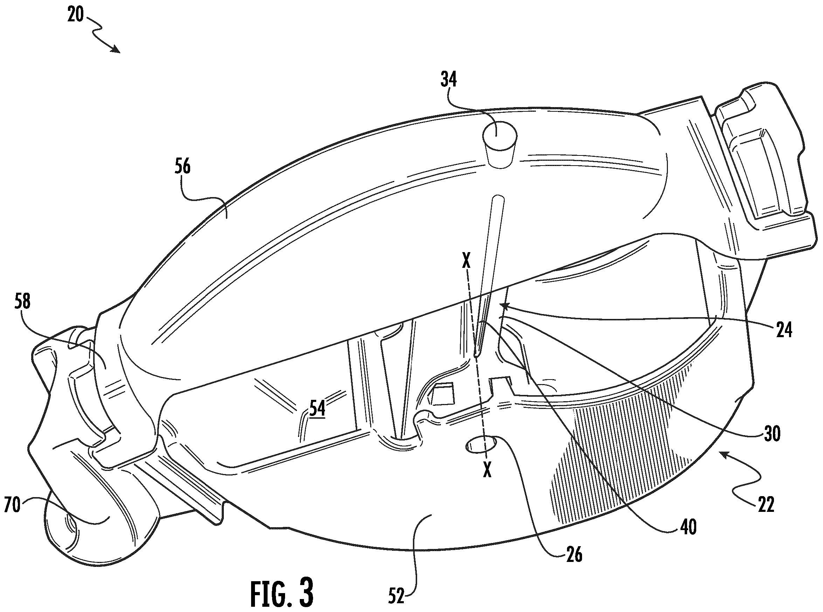

With continued reference to FIGS. 1-3, the housing 22 may have a first end 50 and one or more sidewalls 52 connected to and extending from the first end 50 to define a hollow interior 54 (FIG. 3) within which at least a portion of the indicator member 24 is received. In the illustrated, non-limiting embodiment, the first end 50 of the housing 22 is closed. However, embodiments where the first end 50 of the housing 22 is open are also within the scope of the disclosure. Further, in some embodiments, to reduce the size of the housing 22, the first end 52 of the housing 22 may have a curved or arcuate contour complementary to the path of movement of the first end 32 of the indicator member 24.

In some embodiments, a cover 56 is arranged at or is connectable to the housing 22. For example, the cover 56 may be connectable to the second, opposite end 58 of one or more of the sidewalls 52, in an area proximate the second end 34 of the body 30 of the indicator member 24. In embodiments where the second end 34 of the indicator member 24 extends beyond the second end 58 of the housing 22, the cover 56 may similarly have a hollow interior 60. Accordingly, when mounted about the housing 22, the interior 60 of the cover 56 may cooperate with the interior 54 of the housing 22 to receive the indicator member 24, in its entirety, between the housing 22 and the cover 56. However, embodiments where a portion of the indicator member 24 is not arranged within an interior 54, 60 of a cover 56 or of the housing 22 are also contemplated herein. Further, it should be appreciated that although the cover 56 and housing 22 are illustrated and described herein as separate components, embodiments where a cover 56, or at least a portion thereof, is integrally formed with the housing 22 are also within the scope of the disclosure.

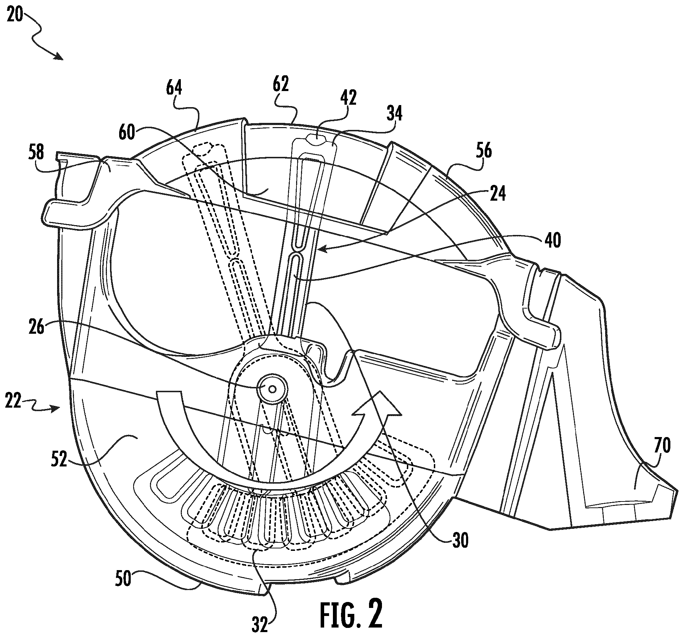

Similar to the housing 22, the cover 56 may have a curved or arcuate contour generally complementary to path of movement of the second end 34 of the indicator member 24 as the indicator member rotates about the axis X. The cover 56 may be translucent, or at least partially translucent, such that the light emitted from the indicator member 24 is visible therethrough. In some embodiments, such as shown in FIG. 3, the translucence of the cover 56 is generally constant over the path of movement of the second end 34 of the indicator member 24. In other embodiments, shown in FIGS. 1 and 2, the cover 56 may have regions with varying degrees of translucence. For example, a first region 62 of the cover 56, such as a central region aligned with the axis X, may have a greater translucence than a second region 64 of the cover 56, such as arranged at a lateral side of the first region 62.

In an embodiment, the housing 22 and/or cover 56 of the level indicator 20 includes one or more mounting features 70 for positioning or mounting the level indicator 20 to a component, as will be described in more detail below. Accordingly, the level indicator 20 is operable to monitor an orientation of the component to which the level indicator 20 is connected via the one or more mounting features 70. In an embodiment, the level indicator 20 is operable to monitor a position of the component relative to a horizontal plane. The gravity acting on the indicator member 24 will cause the indicator member 24 to come to a rest in a vertical position, with the second end 34 arranged vertically above the first end 32. By connecting the housing 22 to the component, the housing 22 is configured to move with the component relative to the horizontal plane. If the component has a horizontal configuration, the light emitted by the indicator member 24 will be visible at a first region 62 of the cover 56, such as near a center of the cover 56 for example. In instances where the component is at a non-parallel angle relative to horizontal, the housing 22 will also be arranged the same non-parallel angle relative to horizontal. In such a configuration, when the indicator member 24 eventually reaches the generally vertical resting position, the light emitted by the indicator member 24 will be visible at a second region 64 of the cover 56, such as near a side of the cover 56 for example. The positioning of the second end 34, and therefore the visible light emitted by the indicator member 24, at a position offset from the middle of center of the cover 56 may indicate to a user a direction and relative angle of the housing 22, and therefore of the component, to a horizontal plane.

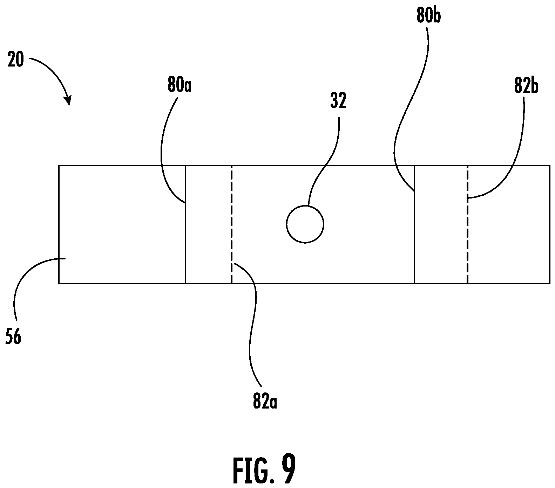

With reference to FIG. 9, the cover 56 may include one or more markings 80a, 80b, 82a, 82b indicating a suitable range of positioning of the indicator member 32. The markings 80a, 80b, 82a, 82b may be formed at the second region 64 of the cover 56. In the illustrated, non-limiting embodiment, the cover 56 includes at least one first marking 80a 80b and at least one second marking 82a, 82b. The at least one first markings 80a, and 80b may indicate to a user a suitable position (or range of positions) of the second end 34 of the indicator member 24 relative to the cover 56 associated with operation of the level indicator 20 in a first configuration. Similarly, the at least one second markings 82a, 82b may indicate to a user a suitable position (or range of positions) of the second end 34 of the indicator member 24 relative to the cover 56 associated with operation of the level indicator 20 in a second configuration.

As will be described in more detail below, the level indicator 20 may be used with a child safety system, and the first and second configurations of the level indicator 20 may be determined by a corresponding configuration of the child safety system. The level indicator 20 may be operable in the first configuration when the child safety system is in a rearward-facing orientation. In this first configuration, the child safety system may be in a level condition when the visual indicator of the indicator member 32 is positioned between the markings 80a and 80b, particularly at an area at or proximate a center point between the two markings 80a, 80b. Similarly, the level indicator 20 may be operable in the second configuration when the child safety system is in a forward-facing orientation. When in the second configuration, the child safety system may be in a level condition when the visual indicator of the indicator member 32 is positioned between the markings 82a and 82b, such as at an area at or proximate a center point between the two markings 82a, 82b. Although separate first and second markings 80a, 80b, 82a, 82b are illustrated and described with respect to use of the level indicator 20 in first and second configurations, it should be understood that in some embodiments, one or more markings may be used to identify a suitable position of the second end 34 of the indicator member 24 relative to the cover 56 associated with operation of the level indicator 20 in both the first configuration and the second configuration.

It should be appreciated that a level indicator 20 as illustrated and described herein may be adapted for use in any suitable application. In an embodiment, the level indicator 20 may be used to monitor the position of a child safety system.

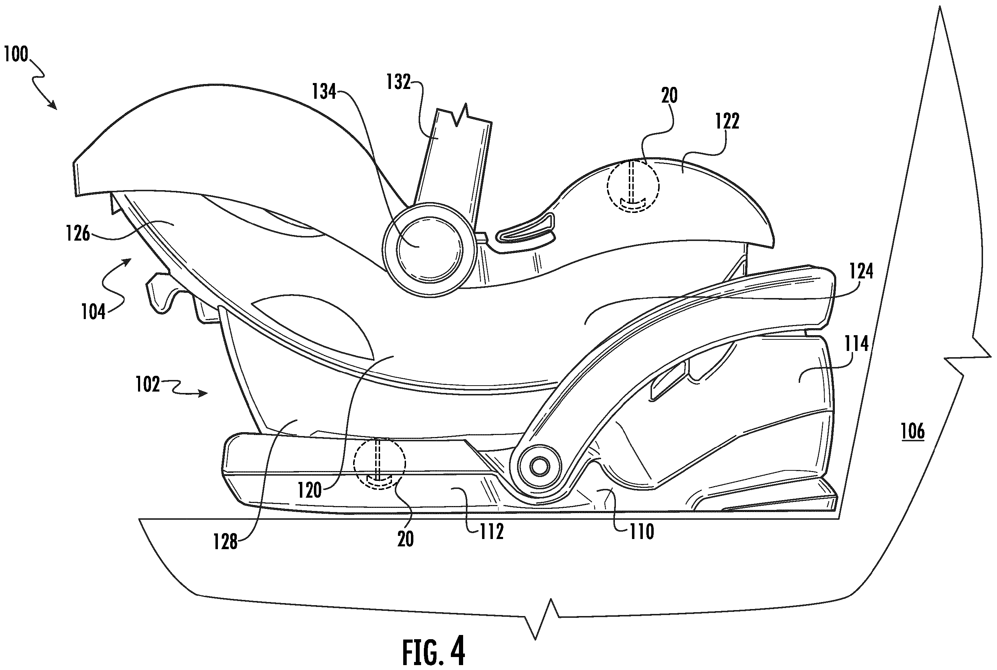

With reference to FIGS. 4-5, an exemplary embodiment of a child safety system 100 is illustrated. In the non-limiting embodiment, the child safety system 100 includes a support base 102 and a child seat 104 connectable to the support base 102. As shown, the child seat 104 is removably connectable to the support base 102. However, in other embodiments, the child seat 104 may be permanently connected to the support base 102. The support base 102 may be positionable in direct contact with a support surface, such as of a vehicle seat 106 for example, and may be attached to the vehicle seat 106 via a connector of a "lower anchor and tether for children" e.g., LATCH system. Alternatively, or in addition, the support base 102 may be detachably coupled to a vehicle seat 106 via a vehicle belt (not shown) associated with the vehicle seat 106.

In the illustrated, non-limiting embodiment, the support base 102 includes a rigid body 110 adapted to support the child seat 104 thereon. Suitable materials for making the support base 102 include but are not limited to rigid plastic or composite materials for example. The rigid body 110 typically includes a base seat portion 112 and a base backrest portion 114 extending at an angle relative to the base seat portion 112. Although the base seat portion 112 and the base backrest portion 114 are illustrated as being integrally formed as a unitary body, embodiments where the base seat portion 112 and the base backrest portion 114 are separate components removably or permanently connected together are also within the scope of the disclosure. It should be understood that the support base 102 illustrated and described herein is intended as an example only and that a support base having another configuration is also contemplated herein.

In the illustrated, non-limiting embodiment, the child seat 104 connectable to the support base 102 is an infant child seat. The term "infant child seat" refers to such a seat as would be defined by one of ordinary skill in the art. For example, an infant child seat may be described as a seat for use by an infant or child too small to use a convertible child seat and may include a carrying handle to allow for portability of the infant child seat external to the vehicle. When mounted about a support base 102, an infant car seat may not be configured to move, for example rotate or incline relative to the support base 102.

In such embodiments, the child seat 104 can include a seat body formed from a seat shell 120 and in some embodiments a seat rim 122. The seat shell 120 alone or in combination with the seat rim 122 may define a seat pan or seat portion 124 and a seat back or upright portion 126 of the child seat 104. The seat back 126 is typically arranged at an angle relative to the seat pan 124. The seat pan 124 and the seat back 126 may be detachably coupled, or alternatively, may be permanently coupled. In some embodiments, the seat shell 120 may be a single, substantially solid, or partially hollow structure defining the seat pan 124 and the seat back 126. One or more seat pads, cushions, soft goods, or the like (not shown) may be disposed in overlapping arrangement with one or more surfaces of the seat pan 124 and/or with one or more surfaces of the seat back 126 to comfortably support a child that is positioned within the child seat 104.

The bottom of the seat shell 120 may include a first seat shell rail 128 and a second seat shell rail 130 arranged at opposing sides of the child seat 104. In some configurations, the first and second seat shell rails 128, 130 may have respective curved rocker bottoms to enable a rocking motion to comfort a child positioned within the child seat 104 when the child seat is supported on a generally flat or planar surface (e.g., in a home environment, restaurant, etc.).

Alternatively, or in addition, the child seat 104 may include a carrying handle 132. In the illustrated, non-limiting embodiment, the carrying handle 132 has a generally arcuate shape and the two opposite ends 134, 136 thereof are respectively connected with a left and right side of the seat shell 120 via respective attachment mechanisms (not shown). In some embodiments, the carrying handle 132 is movably connected with the seat shell 120 and/or the seat rim 122. Accordingly, the carrying handle 132 may be transformable, for example rotatable, between a plurality of positions or angles relative to the seat shell 120, such as to more easily access the child positioned within the child seat 104 or for storage purposes for example. In some embodiments, the attachment mechanisms used to affix the handle to the seat shell 120 may include integrated locking mechanisms (not shown) to maintain the carrying handle 132 at a desired orientation with respect to the seat shell 120.

As noted above, the child seat 104 may be connectable to the support base 102 to mount the child seat 104 relative to the vehicle seat 106. However, in some embodiments, the child seat 104 may be positionable in direct contact with the vehicle seat 106. For example, the child seat 104 may be detachably fixed to a vehicle seat 106, such as via a latch or anchor mechanism (not shown), or via a vehicle belt (not shown) associated with the vehicle seat 10.

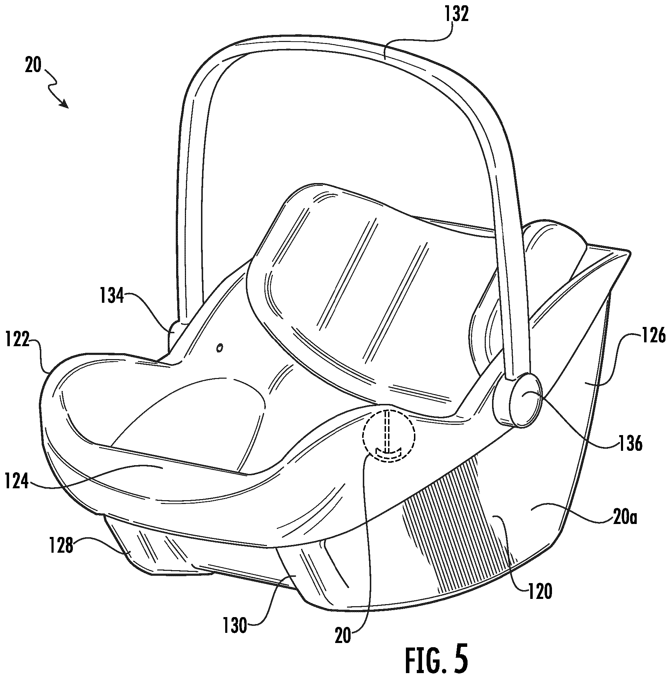

With continued reference to FIGS. 4 and 5, in an embodiment, at least one level indicator, such as the level indicator 20 described herein with reference to FIGS. 1-3, is arranged at the support base 102 of the child safety system 100 to monitor an orientation of the support base 102 relative to a horizontal plane or to the vehicle seat 106. The level indicator 20 may be located at any position of the body 110 where it is visible to a user. In an embodiment, the level indicator 20 is positioned such that the cover 56 and/or the end 34 of the level indicator 24 is visible at an upper surface of the support base 102 and may but need not be arranged near an edge of the support base 102. The level indicator 20 may but need not be visible when the child seat 104 is attached to the support base 102. In an embodiment, the one or more mounting features 70 of the housing 22 of the level indicator 20 may be connectable to the body 110, such as at the base seat portion 112, the base backrest portion 114 or both. Alternatively, the level indicator 20 may be integrally formed with the body 110 of the support base 102. For example, the housing 22 of the level indicator 20 may be formed at least partially by a portion of the body 110 of the support base 102.

In embodiments where the level indicator 20 is mounted to the support base 102, the housing 22 of the level indicator 20 is configured to move, with the support base 102. Accordingly, during installation of the support base 102, as the angle of the support base 102 is adjusted, the angle of the housing 22 will similarly vary. During this movement, the level indicator 20 will indicate to the user a relative position of the housing 22, and therefore the support base 102, relative to a horizontal plane.

Alternatively, or in addition, a level indicator 20 may be mounted to the child seat 104 of the child safety system 100 to monitor an orientation of the child seat 104 relative to one or more of the support base 102, the vehicle seat 106, and a horizontal plane. The level indicator 20 may be located at any position of the child seat 104 visible to a user. For example, the level indicator 20 may be positioned such that the cover 56 and/or the end 34 of the level indicator 24 is visible at the seat rim 122 or at an exterior or side surface of the seat shell 120. The level indicator 20 may be positioned at one or both of the seat pan 124 and the seat back 126 for example. The one or more mounting features 70 of the housing 22 or cover 56 may be connectable to a surface of the seat shell 120, such as at a side of the seat pan 124, the seat back 126, or both. Alternatively, the level indicator 20 may be integrally formed with a portion of the seat shell 120.

In embodiments where the level indicator 20 is mounted to the child seat 104, the housing 22 of the level indicator 20 is configured to move with the child seat 104, relative to the support base 102 and the vehicle seat 106. Accordingly, during installation of the child seat 104, as an angle of the child seat 104 is adjusted, the angle of the housing 22 will similarly vary. During this movement, the level indicator 20 will indicate to the user a relative position of the housing 22, and therefore of the child seat 104.

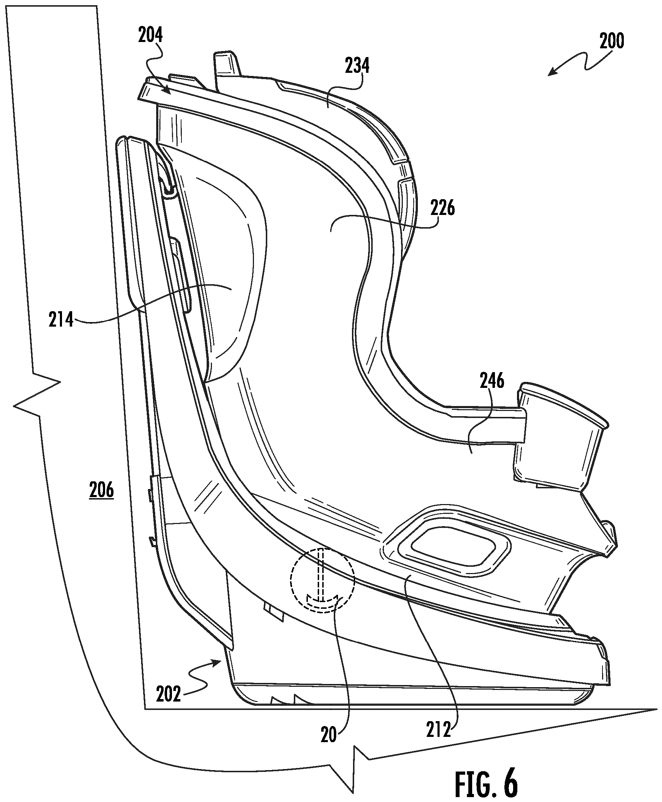

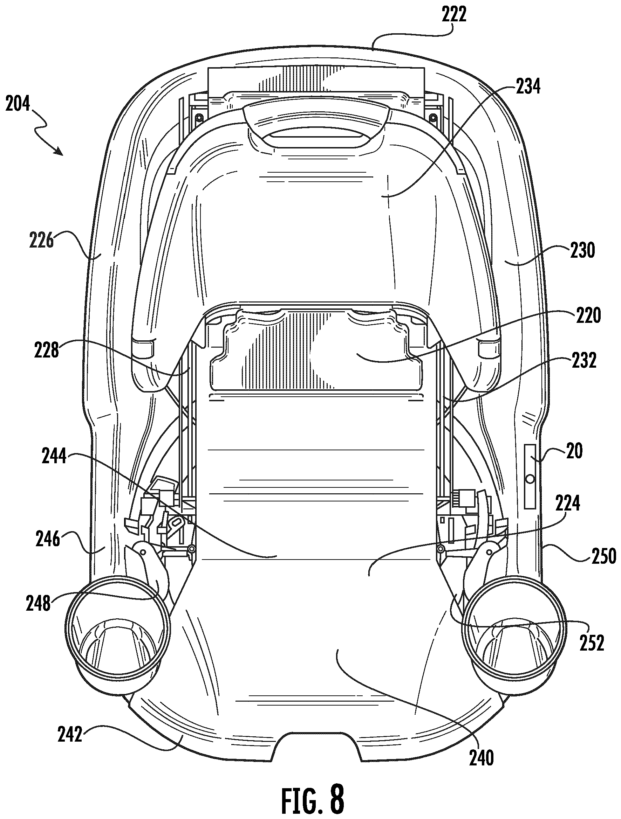

Another example of a child safety system 200 is illustrated in FIGS. 6-9. Similar to the previous embodiment, the child safety system 200 includes a support base 202 and a rigid child seat 204 connected to the support base 202. The support base 202 may be detachably fixed to a vehicle seat 206, such as via a LATCH system, not shown in the FIGS. Alternatively, the support base 202 may be detachably affixed to a vehicle seat 206 via a vehicle belt associated with the vehicle seat 206 or any other suitable means.

As shown, the rigid child seat 204 is connected to the support base 202. In an embodiment, the child seat 204 is permanently connected or affixed to the support base 202. As used herein the term "permanently connected" represents embodiments where the child seat 204 is not intended to be disassembled from the support base 202 by a user. In some embodiments, the support base 202 may be integrally formed with the child seat. Alternatively, the child seat 204 may be detachably coupled to the support base 202, thereby allowing the child seat 204 to be separated from the support base 202.

The child seat 204 includes a seat shell 210 having a seat portion 212 and a backrest or upright portion 214 arranged at an angle relative to the seat portion 212. The seat portion 212 and the upright portion 214 may be detachably coupled, or alternatively, may be permanently coupled. In the illustrated, non-limiting embodiment, the upright portion 214 and the seat portion 212 are integrally formed as a single unitary body. In other embodiments, the upright portion 214 can be rotationally connected to the seat portion 212 such that the upright portion 214 can incline and recline relative to the seat portion 212.

As shown, the upright portion 214 of the seat shell 210 includes an upright support surface 220 generally facing forward and that extends from a first end or top 222 to a second, opposite end or bottom 224 of the upright portion 214. A first upright side member 226 may be arranged at a first side 228 of the upright support surface 220 and a second upright side member 230 may be arranged at a second, opposite side 232 of the upright support surface 220. The first and second upright side members 226, 230 therefore form the left side and the right side of the upright portion 214, respectively. As shown, the first and second upright side members 226, 230 extend forward from the upright support surface 220. The first and second upright side members 226, 230 may extend generally orthogonally to the upright support surface 220, or alternatively, may extend therefrom at another angle, such as an angle greater than 90° for example. Accordingly, the upright support surface 220 and the first and second upright side members 226, 230 define a backrest region or upright support cavity or region within which an upper body of a child is received.

In the illustrated, non-limiting embodiment, the upright portion 214 of the seat shell 210 includes a headrest 234. The headrest 234 is attached to or integral with the upright portion 28. The headrest 234 may be stationary or in some embodiments, may be configured to move relative to the upright support surface 220. For example, the headrest 234 may be configured to translate relative to the upright support surface 220 between a retracted position and an extended position, allowing for adjustment based on the size of the child positioned within the child safety system 200.

The seat portion 212 includes a seat support surface 240 facing generally upwardly and that extends from a first end or front 242 to a second end or back 244 of the seat portion 212. A first seat side member 246 may be arranged at a first side 248 of the seat support surface 240 and a second seat side member 250 may be arranged at a second, opposite side 252 of the seat support surface 240. The first seat side member 246 and the second seat side member 250 extend upwardly and form the left side and the right side of the seat portion 212. The seat support surface 240 and the first and second seat side member 246, 250 in combination define a cavity or region within which at least part of a lower body of a child may be received.

As shown, the seat side members 246, 250 extend at an angle from the seat support surface 240. The angle of the first seat side member 246 relative to the seat support surface 240 may but need not be the same as the angle of the first upright side member 226 relative to the upright support surface 220. Similarly, the angle of the second seat side member 250 relative to the seat support surface 240 may but need not be the same as the angle of the second upright side member 230 relative to the upright support surface 220. In an embodiment, the first upright side member 226 and the first seat side member 246 are integrally formed and the second upright side member 230 and the second seat side member 250 are integrally formed.

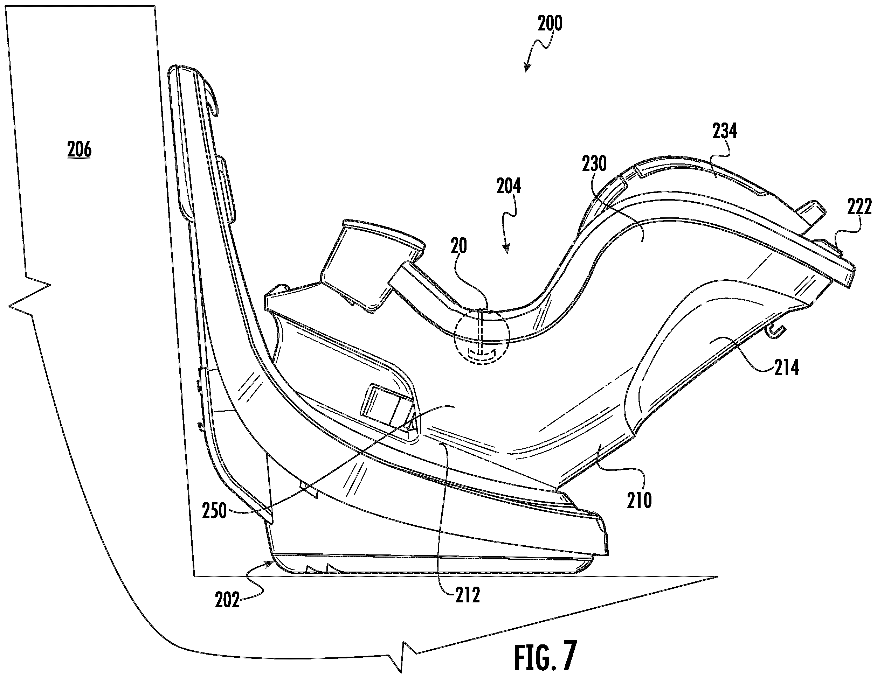

In the illustrated, non-limiting embodiment of FIGS. 6-9, the child seat 204 is a convertible child seat. As used herein, the term "convertible child seat" refers to a seat that may be used in both a rearward-facing direction (FIG. 7) and forward-facing direction (FIG. 6) such as suitable for use by a child between 5 and 65 pounds, and/or up to 49" in height. The convertible child seat may also be referred to herein as an upright child seat or a toddler seat. It should be appreciated that the child seat 204 illustrated and described herein is intended as an example only. When attached to the support base 202, the convertible child seat 204 may be movable relative to the support base 202. For example, the convertible child seat 204 may be configured to rotate, translate, and/or recline relative to the support base 102, while being coupled thereto.

In an embodiment, as shown in FIG. 6, at least one level indicator, similar to the level indicator 20 described herein with reference to FIGS. 1-3, is arranged at the support base 202 of the child safety system 200 to monitor an orientation of a portion of the support base 202. In an embodiment, a level indicator 20 is operable to monitor a position of a bottom surface of the support base 202 relative to a horizontal plane or to the vehicle seat 206. Alternatively, or in addition, a level indicator 20 arranged at the support base 202 may be operable to indicate a position of the child seat 204 relative to a horizontal plane or to the vehicle seat 206. For example, in embodiments where the child seat 204 is configured to recline relative to the support base 202 while being connected thereto, a portion of the support base 202 (not shown), also referred to herein as a "recline portion", may be movable within the child seat 204 to control the incline and recline of the child seat 204. Accordingly, a level indicator 20 may be operably coupled to the recline portion of the support base 202 such that the level indicator 20 indicates the recline of the child seat 204. Alternatively, or in addition, a level indicator 20, may be mounted to directly the child seat 204 of the child safety system 200 to indicate an orientation of the child seat 104, such as the recline of the child seat 204 for example, relative to one or more of the support base 202, the vehicle seat 206, and a horizontal plane.

The one or more level indicators 20 may be located at any position of the child seat 204. Similarly, one or more level indicators 20 may be located at any position of the support base 202 visible to a user and may but need not be visible when the child seat 204 is attached to the support base 202. As previously noted, the at least one level indicator 20 may be mounted to the support base 202 or to the child seat 204 via the one or more mounting features 70 of the housing 22. Alternatively, a level indicator 20 may be integrally formed with the support base 202, or with a portion of the child seat 204, such as the seat shell 210 for example.

Although exemplary embodiments of the level indicator 20 are illustrated and described herein with respect to a seat component of a child safety system (i.e., an infant seat, a toddler seat, and a support base), it should be appreciated that the level indicator 20 may be used with any child furniture, including but not limited to a high chair, a bassinet, a stroller, any type of child seat usable with a stroller, a rocker, a playard, a pack and play, or any other child furniture item configured to support a child.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

The present disclosure provides, in accordance with the following clauses:
1. A level indicator comprising:
   a housing;
   an indicator member rotatable relative to said housing, said indicator member being biased by gravity to a resting position; and
   wherein said indicator member has a luminescent visual indicator, said luminescent visual indicator indicating a position of said indicator member relative to said housing.
2. The level indicator of clause 1, wherein said indicator member includes a light transmission member, and a portion of said light transmission member forms said luminescent visual indicator.
3. The level indicator of clause 2, wherein said light transmission member is a fiber optic filament.
4. The level indicator of clause 3, wherein said fiber optic filament is colored.
5. The level indicator of clause 2, wherein said luminescent visual indicator is arranged at an end of said indicator member.
6. The level indicator of clause 5, wherein an end of said light transmission member is arranged adjacent to said end of said indicator member.
7. The level indicator of clause 2, wherein said light transmission member is arranged within an interior of a body of said indicator member.
8. The level indicator of clause 1, wherein said indicator member has a first end and a second end, and a center of mass of said indicator member is located closer to said first end than said second end.
9. The level indicator of clause 8, wherein in said resting position, said first end is disposed vertically beneath said second end.
10. The level indicator of clause 8, wherein said first end of said indicator member is enlarged relative to a remainder of said indicator member.
11. The level indicator of clause 8, wherein said first end of said indicator member is weighted.
12. The level indicator of clause 11, wherein said visual indicator is arranged at a second end of said visual indicator, said second end being opposite said first end.
13. The level indicator of clause 8, wherein said indicator member includes a weight, said visual indicator and said weight being arranged at opposite sides of an axis of rotation of said indicator member, the indicator member being rotatable relative to said housing about said axis of rotation.
14. The level indicator of clause 1, further comprising a pin extending from said housing and having a longitudinal axis, said indicator member being rotatable about said longitudinal axis.
15. The level indicator of clause 1, wherein at least a portion of said indicator member is arranged within an interior of said housing.
16. The level indicator of clause 1, further comprising a cover connectable to said housing, wherein said indicator member is arranged within a cavity defined between said housing and said cover.
17. A child seat component comprising:
   a seat body; and
   a level indicator operably coupled to said body, said level indicator having a luminescent visual indicator operable to indicate a position of said seat body relative to a horizontal plane.
18. The child seat component of clause 17, wherein said seat body is a support base of a child safety system.
19. The child seat component of clause 17, wherein said seat body is a child seat of a child safety system.
20. The child seat component of clause 17, wherein said level indicator further includes:
   a housing; and
   an indicator member rotatable relative to said housing and biased by gravity to a resting position, said luminescent visual indicator being arranged at said indicator member.
21. The child seat component of clause 20, wherein said indicator member includes a light transmission member and a portion of said light transmission member forms said luminescent visual indicator.
22. The level indicator of clause 21, wherein said light transmission member is a fiber optic filament.
23. The child seat component of clause 22, wherein said fiber optic filament is colored.
24. The child seat component of clause 21, wherein said luminescent visual indicator is arranged at an end of said indicator member.
25. The child seat component of clause 24, wherein an end of said light transmission member is arranged adjacent to said end of said indicator member.
26. The child seat component of clause 21, wherein said indicator member includes an indicator member body and said light transmission member is arranged within an interior of said indicator member body.
27. The child seat component of clause 20, wherein said indicator member has a first end and a second end, and a center of mass of said indicator member is located closer to said first end than said second end.
28. The child seat component of clause 27, wherein in said resting position, said first end is disposed vertically beneath said second end.
29. The child seat component of clause 27, wherein said first end of said indicator member is enlarged relative to a remainder of said indicator member.
30. The child seat component of clause 27, wherein said first end of said indicator member is weighted.
31. The level indicator of clause 30, wherein said visual indicator is arranged at a second end of said indicator member, said second end being opposite said first end.
32. The level indicator of clause 20, wherein said indicator member includes a weight, said visual indicator and said weight being arranged at opposite sides of an axis of rotation of said indicator member, the indicator member being rotatable relative to said housing about said axis of rotation.
33. A child furniture item comprising:
   a body operable to support a child; and
   a level indicator associated with the body to identify a level position of the body, the level indicator including
      a housing;
      an indicator member rotatable relative to said housing, said indicator member being biased by gravity to a resting position; and
      a luminescent visual indicator associated with the indicator member, said luminescent visual indicator indicating a position of said indicator member relative to said housing.
34. The child furniture item of clause 33, wherein the child furniture item is a high chair.
35. The child furniture item of clause 33, wherein the child furniture item is child seat.
36. The child furniture item of clause 33, wherein the child furniture item is a playard or pack and play.
37. The child furniture item of clause 33, wherein the child furniture item is a stroller.
38. The child furniture item of clause 33, wherein said indicator member includes a light transmission member, and a portion of said light transmission member forms said luminescent visual indicator.
39. The child furniture item of clause 38, wherein said light transmission member is a fiber optic filament.
40. The level indicator of clause 38, wherein said light transmission member is arranged within an interior of a body of said indicator member.
41. The child furniture item of clause 33, wherein said luminescent visual indicator is arranged at an end of said indicator member.
42. The child furniture item of clause 33, wherein said indicator member has a first end and a second end, and a center of mass of said indicator member is located closer to said first end than said second end.
43. The child furniture item of clause 42, wherein said first end of said indicator member is enlarged relative to a remainder of said indicator member.
44. The child furniture item of clause 42, wherein said first end of said indicator member is weighted.

## Claims

1. A level indicator comprising:
a housing;
an indicator member rotatable relative to said housing, said indicator member being biased by gravity to a resting position; and
wherein said indicator member has a luminescent visual indicator, said luminescent visual indicator indicating a position of said indicator member relative to said housing.

2. The level indicator of claim 1, wherein said indicator member includes a light transmission member, and a portion of said light transmission member forms said luminescent visual indicator.

3. The level indicator of claim 2, wherein said light transmission member is a fiber optic filament.

4. The level indicator of claim 3, wherein said fiber optic filament is colored.

5. The level indicator of any one of claims 2 to 4, wherein said luminescent visual indicator is arranged at an end of said indicator member.

6. The level indicator of claim 5, wherein an end of said light transmission member is arranged adjacent to said end of said indicator member.

7. The level indicator of any one of claims 2 to 6, wherein said light transmission member is arranged within an interior of a body of said indicator member.

8. The level indicator of any one of the preceding claims, wherein said indicator member has a first end and a second end, and a center of mass of said indicator member is located closer to said first end than said second end.

9. The level indicator of claim 8, wherein:
in said resting position, said first end is disposed vertically beneath said second end;
said first end of said indicator member is enlarged relative to a remainder of said indicator member; and/or
said indicator member includes a weight, said visual indicator and said weight being arranged at opposite sides of an axis of rotation of said indicator member, the indicator member being rotatable relative to said housing about said axis of rotation.

10. The level indicator of claim 8 or claim 9, wherein:
said first end of said indicator member is weighted; and/or
said visual indicator is arranged at a second end of said visual indicator, said second end being opposite said first end.

11. The level indicator of any preceding claim:
further comprising a pin extending from said housing and having a longitudinal axis, said indicator member being rotatable about said longitudinal axis;
wherein at least a portion of said indicator member is arranged within an interior of said housing; and/or
further comprising a cover connectable to said housing, wherein said indicator member is arranged within a cavity defined between said housing and said cover.

12. A child seat component comprising:
a seat body; and
a level indicator operably coupled to said body, said level indicator having a luminescent visual indicator operable to indicate a position of said seat body relative to a horizontal plane.

13. The child seat component of claim 12, wherein:
said seat body is a support base of a child safety system; or
said seat body is a child seat of a child safety system.

14. The child seat component of claim 12 or claim 13, wherein said level indicator further includes:
a housing; and
an indicator member rotatable relative to said housing and biased by gravity to a resting position, said luminescent visual indicator being arranged at said indicator member.

15. The child seat component of claim 14, wherein said indicator member includes a light transmission member and a portion of said light transmission member forms said luminescent visual indicator, optionally wherein said light transmission member is a fiber optic filament, optionally wherein said fiber optic filament is colored.

16. The child seat component of claim 15, wherein:
said luminescent visual indicator is arranged at an end of said indicator member, optionally wherein an end of said light transmission member is arranged adjacent to said end of said indicator member; and/or
wherein said indicator member includes an indicator member body and said light transmission member is arranged within an interior of said indicator member body.

17. The child seat component of any one of claims 14 to 16, wherein:
said indicator member has a first end and a second end, and a center of mass of said indicator member is located closer to said first end than said second end, optionally wherein (a) in said resting position, said first end is disposed vertically beneath said second end, (b) said first end of said indicator member is enlarged relative to a remainder of said indicator member, and/or (c) said first end of said indicator member is weighted, optionally wherein said visual indicator is arranged at a second end of said indicator member, said second end being opposite said first end; and/or
said indicator member includes a weight, said visual indicator and said weight being arranged at opposite sides of an axis of rotation of said indicator member, the indicator member being rotatable relative to said housing about said axis of rotation.

18. A child furniture item comprising:
a body operable to support a child; and
a level indicator associated with the body to identify a level position of the body, the level indicator including
a housing;
an indicator member rotatable relative to said housing, said indicator member being biased by gravity to a resting position; and
a luminescent visual indicator associated with the indicator member, said luminescent visual indicator indicating a position of said indicator member relative to said housing.

19. The child furniture item of claim 18, wherein the child furniture item is a high chair, a child seat, a playard or pack and play, or a stroller.

20. The child furniture item of claim 18 or claim 19, wherein said indicator member includes a light transmission member, and a portion of said light transmission member forms said luminescent visual indicator, optionally wherein (a) said light transmission member is a fiber optic filament, and/or (b) said light transmission member is arranged within an interior of a body of said indicator member.

21. The child furniture item of any one of claims 18 to 20, wherein
said luminescent visual indicator is arranged at an end of said indicator member; and/or
said indicator member has a first end and a second end, and a center of mass of said indicator member is located closer to said first end than said second end, optionally wherein (a) said first end of said indicator member is enlarged relative to a remainder of said indicator member, and/or (b) said first end of said indicator member is weighted.
